# FASCICULE DE BREVET EUROPEEN

(11) **EP 3 747 751 B1**
(45) Date de publication et mention de la délivrance du brevet: **03.11.2021**
(21) Numéro de dépôt: 20167835.6
(22) Date de dépôt: 02.04.2020
(51) Int. Cl.: B62M 3/08

(54) **PÉDALE AUTOMATIQUE POUR CYCLE**
AUTOMATISCHES PEDAL FÜR FAHRRAD
AUTOMATIC PEDAL FOR A CYCLE

(30) Priorité: 03.06.2019 FR 1905841
(43) Date de publication de la demande: 09.12.2020
(73) Titulaire: Look Cycle International, 58000 Nevers (FR)
(72) Inventeur: PAILLAUD, Gérald, 58640 VARENNES VAUZELLES (FR); JAILLET, Vincent, 58130 URZY (FR); HOLTERBOCH, Vincent, 58180 MARZY (FR)
(74) Mandataire: Ipsilon

(56) Documents cités:
- CH-A5- 686 623
- US-A1- 2007 175 293
- US-A1- 2009 031 850

## Description

### Domaine technique

La présente invention concerne une pédale automatique pour cycle, en particulier une pédale pour cycle de route, permettant la solidarisation d'une chaussure de cycliste contre la pédale.

### Arrière-plan technologique

Une pédale automatique comporte de manière classique un corps de pédale monté rotatif sur un axe de pédale apte à être relié à une manivelle de pédalier. La notion de "automatique" est liée au fait que la chaussure porte une cale ou plaque de retenue fixée sous la semelle de la chaussure du cycliste, et destinée à déclencher une fixation à mains libres en sollicitant tout simplement cette plaque de retenue contre des moyens d'accrochage prévus sur la pédale. La pédale est en outre pourvue d'une surface d'appui au-dessus de l'axe de pédale contre laquelle vient se poser la plaque de retenue.

Les moyens d'accrochage prévus sur le corps de pédale comprennent en général un organe avant fixe d'accrochage de la plaque de retenue et un organe d'accrochage arrière mobile monté pivotant sur le corps de pédale autour d'un axe de rotation parallèle à l'axe de pédale, entre une position de retenue de ladite plaque en prise entre les organes d'accrochage avant et arrière, et une position de libération de la plaque par le pivotement dudit organe d'accrochage arrière à l'encontre de l'action d'un moyen de rappel élastique dont l'une des extrémités est reliée à l'organe d'accrochage arrière et l'autre extrémité est reliée audit corps de pédale.

Une telle pédale automatique à plaque de retenue et de liaison rapide est classique et se trouve décrit dans par exemple la publication FR 2 442 175. Le document US 2007/175293 A1 divulgue une pédale automatique similaire.

L'enclenchement de la plaque de retenue sur la pédale se fait de manière automatique par l'introduction de l'extrémité avant de la plaque de retenue dans l'organe d'accrochage avant sur la pédale et par un mouvement de pivotement de la plaque vers le bas, ce qui fait pivoter l'organe d'accrochage arrière vers l'extérieur à l'encontre de l'effet du moyen de rappel élastique afin de permettre l'introduction de l'extrémité libre de celui-ci dans l'organe d'accrochage arrière. Ensuite, l'organe d'accrochage arrière revient automatiquement à sa position initiale par l'effet de l'action du moyen de rappel élastique.

Le déclenchement de la plaque de retenue, c'est-à-dire la libération de celle-ci de la pédale, se fait par un mouvement de rotation de la plaque autour d'un axe vertical à proximité de l'extrémité avant de la plaque, ce qui provoque le pivotement de l'organe d'accrochage arrière qui ainsi lâche sa prise. Par ailleurs, cette libération de la plaque de retenue peut aussi être commandée de façon indépendante de la volonté du cycliste lors d'une chute, lorsque le pied du cycliste effectue le mouvement requis ; la pédale joue dans ce cas un rôle de sécurité et de protection.

On connaît un grand nombre de pédales automatiques qui diffèrent les unes des autres essentiellement par la mise en œuvre des moyens de retenue automatique utilisés pour relier la cale ou plaque de retenue au corps de pédale. Elles ont toutes en commun qu'elles comportent un moyen de rappel élastique de l'organe d'accrochage arrière mobile qui précontraint cet organe vers une position de retenue de la plaque sur le corps de pédale.

L'une des extrémités de ce moyen de rappel élastique est ainsi reliée à l'organe d'accrochage arrière, alors que l'autre extrémité est reliée au corps de pédale. Généralement, le moyen de rappel élastique est constitué par un ressort hélicoïdal métallique qui peut fonctionner en compression comme dans la publication EP 0 146 454, ou en torsion comme dans la publication FR 2 620 410.

Un système de réglage venant plus ou moins contraindre le ressort à l'une de ses extrémités est généralement présent afin de régler la tension de chaussage/déchaussage. Ce système de réglage peut comporter un système vis/écrou agissant sur l'une des extrémités d'un ressort de torsion, comme décrit dans la publication précitée FR 2 620 410, ou d'un ressort de compression, comme décrit dans la publication précitée EP 0 146 454. Le document FR 2 850 079 décrit par ailleurs un système de réglage comportant une came agissant sur un ressort de torsion.

D'autres pédales automatiques connues utilisent un moyen de rappel élastique sous forme d'une lame sollicitée en flexion. Ici encore, il est possible d'ajuster la tension de chaussage/déchaussage par l'intermédiaire d'un système de réglage de la tension de la lame comportant soit une came, soit une vis comme décrit notamment dans la publication EP 1 063 161.

Toutes les solutions de réglage précédentes à vis ou à came nécessitent l'emploi d'un outil.

On connaît enfin de la publication EP 2 020 373 une pédale automatique dont le moyen de rappel élastique est formé par une lame, par exemple en carbone, sollicitée en flambage. Plus précisément, la lame s'étend dans un plan longitudinal par rapport au corps de pédale de manière à être sollicitée le long de son axe longitudinal en flambage par l'organe d'accrochage arrière lorsque celui-ci est pivoté vers la position de libération de la plaque de retenue. Une pédale de ce type n'est pas équipée d'un système de réglage de la tension de chaussage/déchaussage car il est plus difficile de faire varier la raideur d'une lame sollicitée en flambage sans risquer notamment que cette lame ne se désolidarise de la pédale. Si l'utilisateur du cycle souhaite modifier le réglage, la seule possibilité qui s'offre à lui à ce jour est de changer la lame.

Ainsi, aucune des solutions connues ne permet à un cycliste de faire varier simplement la tension de chaussage/déchaussage d'une pédale automatique, soit parce que les systèmes de réglage intégrés nécessitent l'emploi d'un outil, soit parce que la pédale automatique n'intègre aucun système de réglage.

### Résumé de l'invention

La présente invention propose de remédier aux inconvénients précités.

Plus particulièrement, la présente invention a pour objet une pédale automatique de cycle comportant un corps de pédale monté rotatif sur un axe de pédale apte à être relié à une manivelle de pédalier, ledit corps de pédale comportant des moyens d'accrochage d'une plaque de retenue fixée sous une chaussure de cycliste, lesdits moyens d'accrochage étant composés d'un organe d'accrochage avant fixe et d'un organe d'accrochage arrière mobile monté pivotant sur ledit corps de pédale autour d'un axe de rotation sensiblement parallèle audit axe de pédale, entre une position de retenue de ladite plaque en prise entre lesdits organes d'accrochage avant et arrière, et une position de libération de ladite plaque par le pivotement dudit organe d'accrochage arrière à l'encontre de l'action d'un moyen de rappel élastique relié d'une part audit organe d'accrochage arrière, et d'autre part audit corps de pédale, ladite pédale comportant en outre un système de réglage de la force de rappel du moyen de rappel élastique afin de régler une tension de chaussage/déchaussage, caractérisée en ce que ledit moyen de rappel élastique est composé d'un nombre variable d'organes élastiques comportant chacun une extrémité reliée audit organe d'accrochage arrière et une autre extrémité reliée audit corps de pédale, sélectionnés parmi une pluralité d'organes élastiques s'étendant entre l'organe d'accrochage arrière et le corps de pédale, et en ce que ledit système de réglage est apte à sélectionner les organes élastiques composant ledit moyen de rappel élastique pour atteindre une valeur prédéfinie de tension de chaussage/déchaussage.

Selon d'autres caractéristiques avantageuses et non limitatives d'une pédale automatique conforme à l'invention:
- ladite pluralité d'organes élastiques comprend au moins deux organes élastiques de nature différente ;
- au moins un organe élastique de ladite pluralité d'organes élastiques est un ressort hélicoïdal;
- au moins un organe élastique de ladite pluralité d'organes élastiques est un organe élastique allongé s'étendant dans un plan longitudinal par rapport audit corps de pédale. Par exemple, ledit organe élastique allongé est une lame apte, lorsqu'elle est sélectionnée par ledit système de réglage, à être sollicitée le long de son axe longitudinal en flambage lorsque l'organe d'accrochage arrière est pivoté vers la position de libération de ladite plaque de retenue. En variante, ledit organe élastique allongé est une lame apte, lorsqu'elle est sélectionnée par ledit système de réglage, à être sollicitée en flexion lorsque l'organe d'accrochage arrière est pivoté vers la position de libération de ladite plaque de retenue ;
- les organes élastiques de ladite pluralité d'organes élastiques peuvent s'étendre parallèlement entre eux ;
- les organes élastiques de ladite pluralité d'organes élastiques sont par exemple des lames intégrées dans une seule et même lamelle élastique, ou des lames séparées les unes des autres ;
- le système de réglage peut comporter un curseur de sélection, monté mobile en translation selon une direction parallèle à l'axe de rotation pour occuper différentes positions ;
- dans un mode de réalisation possible, chaque organe élastique de ladite pluralité d'organes élastiques est une lame apte, lorsqu'elle est sélectionnée par ledit système de réglage, à être sollicitée le long de son axe longitudinal en flambage lorsque l'organe d'accrochage arrière est pivoté vers la position de libération de ladite plaque de retenue, et ledit curseur de sélection comporte un corps longitudinal muni d'une rainure longitudinale s'étendant parallèlement à l'axe de rotation de sorte qu'elle soit apte à venir en prise, selon la position de sélection du curseur, avec une extrémité libre de chaque lame sélectionnée ;
- le système de réglage peut comporter, en variante ou en complément une pluralité de boutons poussoirs aptes à interagir chacun, en position enclenchée, avec un organe élastique différent de ladite pluralité d'organes élastiques ;
- le système de réglage peut comporter, en variante ou en complément, une pluralité de curseurs de sélection aptes à interagir chacun, en position de sélection, avec un organe élastique différent de ladite pluralité d'organes élastiques ;
- ladite pluralité d'organes élastiques peut comprendre au moins deux organes élastiques avec des raideurs de valeurs différentes ;
- le système de réglage peut être porté par l'organe d'accrochage arrière ou par le corps de pédale.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 illustre une vue éclatée en perspective d'un exemple de pédale automatique pour cycle selon un premier mode de réalisation conforme à l'invention;
[fig. 2] La figure 2 illustre une vue en perspective de dessus de la pédale automatique assemblée de la figure 1 ;
[fig. 3] La figure 3 illustre une vue en perspective de dessous de la pédale automatique assemblée de la figure 1 ;
[fig. 4] La figure 4 illustre une coupe partielle vue de dessous de la pédale automatique de la figure 1 pour une position de sélection donnée du système de réglage de la force de rappel du moyen élastique;
[fig. 5] La figure 5 illustre une coupe partielle vue de dessus de la pédale automatique de la figure 4 ;
[fig. 6] La figure 6 illustre une coupe partielle vue de dessus de la pédale automatique de la figure 1 pour une autre position de sélection du système de réglage de la force de rappel du moyen élastique ;
[fig. 7] La figure 7 illustre une vue de dessous d'un exemple de pédale automatique conforme à l'invention avec une variante de réalisation d'un système de réglage ;
[fig. 8] La figure 8 illustre une vue de dessous d'un exemple de pédale automatique conforme à l'invention avec une autre variante de réalisation d'un système de réglage ;
[fig. 9] La figure 9 illustre une coupe partielle vue de dessus d'un exemple de pédale automatique selon un deuxième mode de réalisation conforme à l'invention ;
[fig. 10] La figure 10 illustre schématiquement une coupe partielle vue de dessus d'un exemple de pédale automatique selon un autre mode de réalisation conforme à l'invention.

### Description de mode(s) de réalisation

Dans les figures, les éléments identiques ou équivalents porteront les mêmes signes de référence.

Plusieurs modes de réalisation d'une pédale automatique conforme à l'invention vont à présent être décrits. Tous ces modes de réalisation ont en commun le fait que la pédale automatique est équipée d'une pluralité d'organes élastiques montés en parallèle et activables selon les besoins pour former un moyen de rappel élastique s'opposant au chaussage/déchaussage d'une cale ou plaque de retenue sur la pédale automatique. Le réglage de l'effort du moyen de rappel élastique est rendu possible grâce à un système de réglage permettant de choisir, parmi la pluralité d'organes élastiques, un nombre plus ou moins important d'organes élastiques composant le moyen de rappel élastique. La valeur de la tension de chaussage/déchaussage, c'est-à-dire de la force de rappel du moyen de rappel élastique, correspond à la somme des forces de rappel associées aux organes élastiques choisis pour composer le moyen élastique.

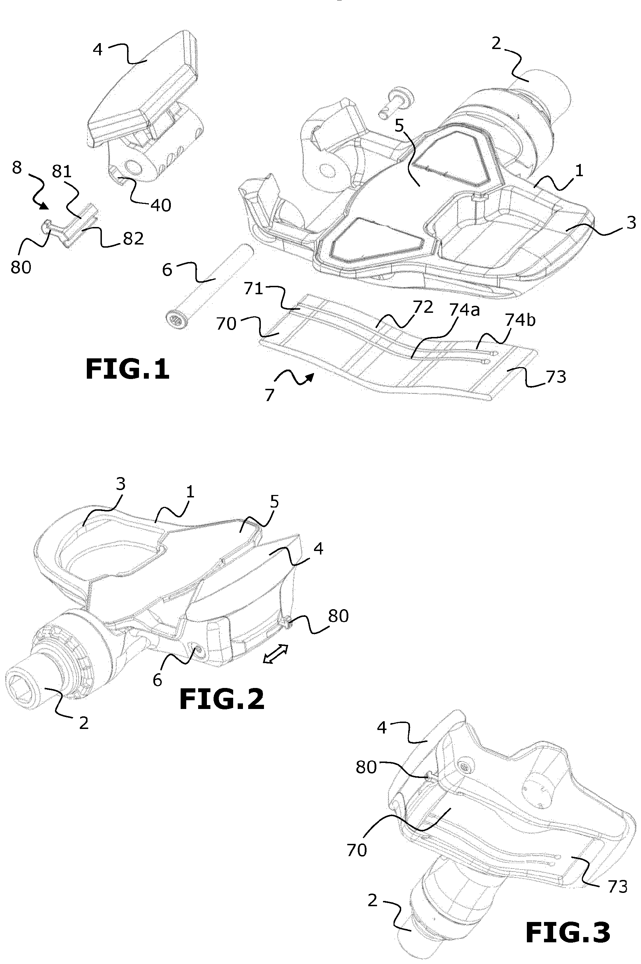

Les figures 1 à 6, 7 et 8 montrent trois variantes d'un premier mode de réalisation de la pédale automatique selon l'invention dans lequel le moyen de rappel élastique est composé d'une ou plusieurs lames aptes à être sollicitées en flambage, selon la position d'un système de réglage.

La pédale comporte de manière classique un corps de pédale 1 monté rotatif sur un axe de pédale 2 destiné à être relié à une manivelle de pédalier de cycle (non représentée).

Le corps de pédale 1 est muni de moyens d'accrochage d'une cale ou plaque de retenue (non représentée) fixée sous la semelle d'une chaussure de cycliste (non représentée).

Les moyens d'accrochage sont composés d'un organe d'accrochage avant fixe 3 apte à coopérer avec un organe de liaison mâle, par exemple une lèvre prévue à l'avant de la plaque de retenue, et d'un organe d'accrochage arrière mobile 4 apte à coopérer avec un organe de liaison femelle, par exemple un évidement prévu à l'arrière de la plaque de retenue.

La pédale est en outre pourvue d'une surface d'appui 5 au-dessus de l'axe de pédale 2 contre laquelle vient se poser la plaque de retenue.

L'organe d'accrochage arrière 4 a la forme d'un levier monté pivotant sur le corps de pédale 1 autour d'un axe de rotation 6 sensiblement parallèle à l'axe de pédale 2, entre une position de retenue dans laquelle la plaque de retenue est en prise entre les organes d'accrochage avant et arrière 3, 4, et une position de libération dans laquelle la plaque de retenue est normalement pivotée vers l'extérieur ou bien vers l'intérieur, par exemple lors d'une chute.

La pédale automatique comporte également une pluralité d'organes élastiques, par exemple trois organes élastiques allongés 70, 71, 72, ici sous forme de lames élastiques, s'étendant parallèlement entre eux entre l'organe d'accrochage arrière 4 et le corps de pédale 1, dans un plan longitudinal par rapport au corps de pédale 1. Dans l'exemple non limitatif représenté, les trois lames élastiques formant les trois organes élastiques sont intégrées dans une seule et même lamelle élastique 7 dans laquelle deux découpes traversantes 74a et 74b s'étendant sur une partie de la longueur de la lamelle élastique 7 ont été réalisées afin de définir les trois lames 70, 71, 72. Les trois lames 70, 71, 72 ont donc ici une première extrémité commune 73, alors que leurs deuxièmes extrémités sont distinctes les unes par rapport aux autres. Dans d'autres variantes de réalisation, des lames entièrement distinctes, en d'autres termes, séparées les unes des autres, peuvent néanmoins être envisagées sans départir du cadre de l'invention.

La lamelle élastique 7 et les lames 70, 71, 72 la composant s'étendent de préférence sur au moins deux tiers de la longueur de la pédale en étant disposées dans un logement longitudinal prévu dans le corps de pédale 1. Ce logement est ouvert au moins vers l'arrière afin de permettre de relier l'extrémité libre d'au moins l'une des lames 70, 71, 72 à l'organe d'accrochage arrière 4, par l'intermédiaire d'un système de réglage 8, comme cela sera expliqué dans la suite. Le logement est prévu centralement dans le corps de pédale 1. En variante, ce logement pourrait être latéralement disposé du côté extérieur du corps de pédale 1 et être en outre ouvert vers le bas et sur le côté.

L'extrémité avant commune 73 de la lamelle élastique 7 peut être fixe et encastrée dans une paroi verticale du logement, mais elle est de préférence librement reçue dans un évidement avant allongé afin d'éviter les sollicitations importantes autour de l'encastrement du corps de pédale qui peut par exemple être en matière plastique injectée.

Dans le mode de réalisation illustré sur les trois variantes des figures 1 à 6, 7 et 8, seule la lame 70 ou l'ensemble formé par les deux lames 70 et 71, ou encore l'ensemble formé par les trois lames 70, 71 et 72 peuvent être sélectionnés par un utilisateur selon la tension de chaussage/déchaussage préférée par l'utilisateur parmi trois valeurs de tension possibles. La sélection est effectuée par l'intermédiaire du système de réglage 8 pour former un moyen de rappel élastique unique dont l'une des extrémités, correspondant aux extrémités libres des lames sélectionnées, est reliée à l'organe d'accrochage arrière 4, et l'autre extrémité, correspondant ici à l'extrémité commune 73, est reliée au corps de pédale 1, de manière à exercer une force de rappel à l'encontre de laquelle l'organe d'accrochage arrière 4 est pivoté vers l'arrière à partir de la position de retenue à la position de libération de la plaque de retenue.

Le logement est adapté pour permettre à chacune des lames 70, 71 et 72 de la lamelle 7, lorsqu'elle est sélectionnée par le système de réglage 8, d'être sollicitée le long de leur axe longitudinal en flambage verticalement vers le bas. En variante non représentée, les lames pourraient être configurées pour être sollicitées en flambage verticalement vers le haut.

Chacune des lames 70, 71 et 72 de la lamelle 7 est de préférence précontrainte en flambage afin de faciliter le début de son armement en supprimant le pic d'effort nécessaire pour faire passer la lame d'une extension droite à une extension flambée.

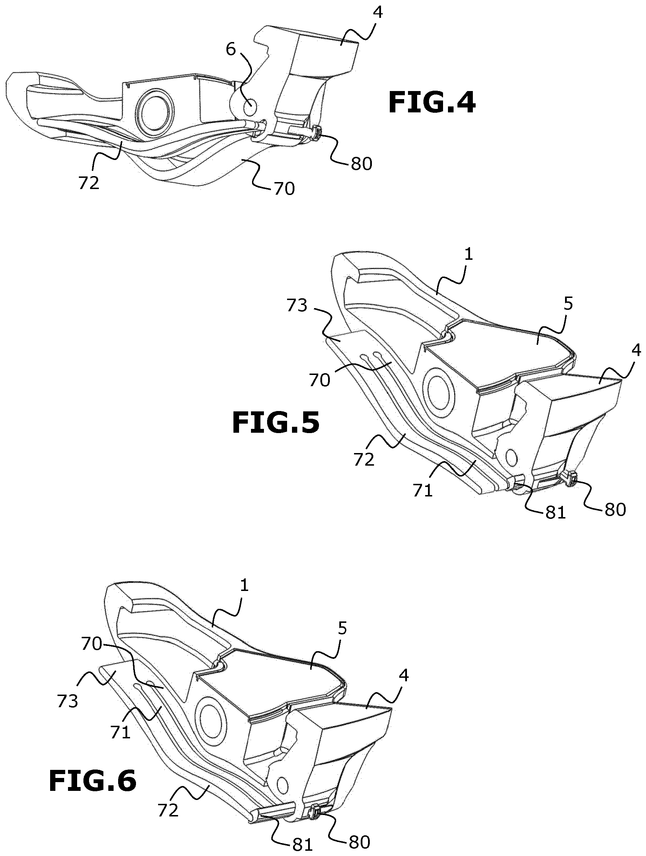

Le système de réglage 8 peut être réalisé, comme visible dans la variante de réalisation illustré sur les figures 1 à 6, sous la forme d'un curseur de sélection, monté mobile en translation selon une direction parallèle à l'axe de rotation 6 de l'organe d'accrochage arrière 4 pour occuper différentes positions. Ce curseur de sélection comporte un organe de préhension 80 accessible à un utilisateur depuis l'arrière de l'organe d'accrochage arrière 4 pour permettre de commander manuellement le mouvement de translation du curseur jusqu'à la position de sélection, ainsi qu'un corps longitudinal 81 muni d'une rainure longitudinale 82 s'étendant parallèlement à l'axe de rotation 6 de sorte qu'elle soit apte à venir en prise, selon la position de sélection du curseur avec :
- uniquement l'extrémité libre de la lame 70, comme illustré par les figures 4 et 5 ; ou
- l'extrémité libre de chacune des lames 70 et 71 ;
- l'extrémité libre de chacune des trois lames 70, 71 et 72, comme illustré par la figure 6.

Le corps longitudinal 81 muni de sa rainure 82 est positionné mobile en translation dans une glissière 40 prévue dans la partie inférieure de l'organe d'accrochage arrière 4 et décalée vers le bas par rapport à l'axe de rotation 6 de celui-ci, de sorte que la rainure soit positionnée dans le plan des extrémités libres des lames 70, 71, 72. Les extrémités arrière des lames sélectionnées en fonction de la position du curseur de sélection sont ainsi librement reçues dans la rainure 82.

La glissière 40 est, dans le mode de réalisation illustré, formée dans un prolongement de l'organe d'accrochage arrière 4 vers le bas, la partie inférieure de la glissière 40 formant une butée vers le bas pour empêcher le curseur de glisser hors de la glissière.

A la différence des systèmes connus dans lesquels on utilise un mécanisme venant plus ou moins contraindre un organe élastique, il est ici possible pour un utilisateur de choisir aisément parmi trois valeurs possibles prédéfinies de tension de chaussage/déchaussage à savoir :
- une première valeur de tension de chaussage/déchaussage correspondant à la force de rappel associée à la seule lame 70, lorsque le curseur de sélection est, comme illustré sur les figures 4 et 5, dans une position où la rainure longitudinale 82 du corps longitudinal 81 du curseur est en prise uniquement avec l'extrémité de la lame 70 ;
- une deuxième valeur de tension de chaussage/déchaussage correspondant à la somme des forces de rappel associées aux deux lames 70 et 71, lorsque le curseur de sélection est dans une position intermédiaire où la rainure longitudinale 82 du curseur est en prise avec l'extrémité de chacune des lames 70 et 71 ;
- une troisième valeur de tension de chaussage/déchaussage correspondant à la somme des forces de rappel associées aux trois lames 70 à 72, lorsque le curseur de sélection est, comme illustré sur la figure 6, dans une position où la rainure longitudinale 82 du corps longitudinal 81 du curseur est en prise uniquement avec l'extrémité de chacune des lames 70, 71 et 72.

La lamelle élastique 7 peut avantageusement être en matériau composite, par exemple en fibres de carbone, et on peut alors, par le choix de la composition des couches, obtenir la valeur de raideur, et donc la force de rappel que l'on souhaite pour chaque lame 70, 71, 72. Les avantages d'une lamelle en matériau composite sont, entre autres, une excellente résistance à la corrosion, ainsi qu'une résistance à la fatigue pratiquement illimitée, à condition que la lamelle soit correctement dimensionnée.

Les lames 70, 71 et 72 peuvent être identiques et présenter ainsi la même raideur. En variante, comme représenté sur les figures 1 à 8, les lames ont des largeurs (dimensions selon l'axe de rotation 6) différentes, et donc des raideurs de valeurs différentes. Par exemple, la lame 70 est une lame large (par exemple de largeur égale à environ 2 cm), alors que les lames 71 et 72 sont identiques avec une largeur inférieure (par exemple de largeur égale à environ 0,5 cm). Par exemple, la lame large 70 présente une raideur de valeur a, alors que les deux lames 71 et 72 ont chacune une raideur de valeur b. Dans cet exemple nullement limitatif, un utilisateur peut choisir, à l'aide du curseur de sélection, la valeur de la tension de réglage parmi trois valeurs possibles, à savoir a, ou a + b ou a+ b +b.

Comme indiqué précédemment, dans d'autres variantes de réalisation, les différentes lames peuvent être entièrement distinctes entièrement distinctes. Dans ce cas, des raideurs différentes pour les lames peuvent être obtenues en prévoyant des lames de largeurs différentes, et/ou des matériaux différents pour les lames. Par exemple, une lame en carbone peut être prévue avec la plus grande raideur, et une ou deux autres lames en plastique peuvent être prévues avec des raideurs de valeurs inférieures.

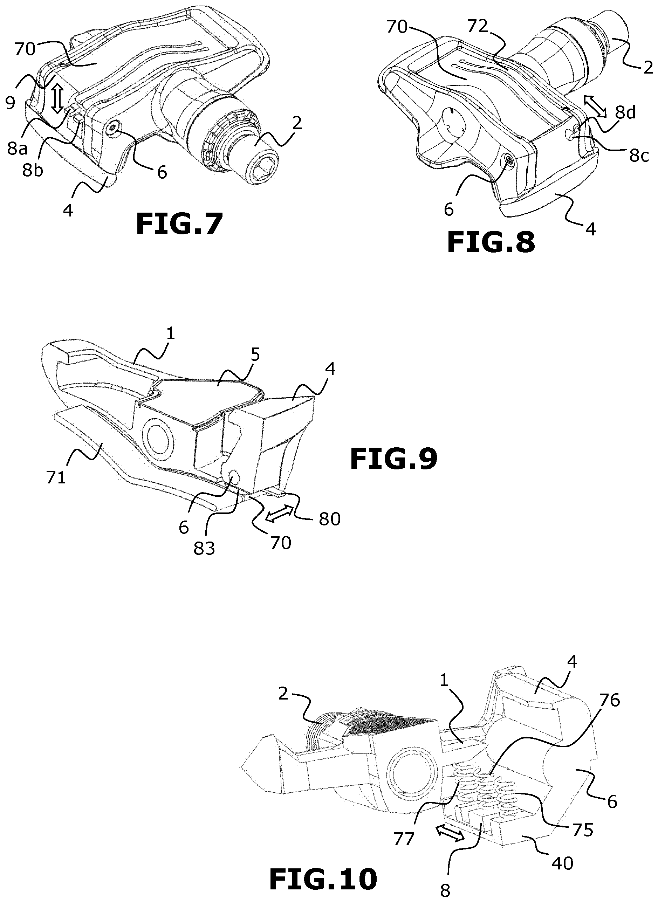

D'autres variantes de réalisation peuvent être envisagées pour réaliser le système de réglage 8 :
Ainsi, dans la variante de réalisation illustrée sur la figure 7, le curseur de sélection unique a été remplacé par une pluralité de curseurs de sélection aptes à interagir chacun, en position de sélection, avec un organe élastique différent de ladite pluralité d'organes élastiques. Plus précisément, dans l'exemple représenté, le système de réglage comporte un premier curseur de sélection 8a apte à contraindre en flambage la lame centrale, et un deuxième curseur de sélection 8b apte à contraindre en flambage la lame située la plus à droite sur la figure. Chaque curseur 8a, 8b peut être déplacé manuellement en translation dans la direction de la flèche, vers le haut ou vers le bas selon que l'utilisateur choisisse de sélectionner ou non les lames associées. Dans cet exemple non limitatif, aucun curseur n'est associé à la lame 70, celle-ci étant de préférence toujours sélectionnée par défaut par une paroi 9 qui la sollicite en flambage. La pédale de la figure 7 est ici illustrée dans une situation où aucun des curseurs de sélection 8a, 8b n'a été positionné pour contraindre en flambage la lame qui lui est associée. La valeur de tension de chaussage/déchaussage correspond donc ici à la force de rappel associée à la seule lame 70.

Dans une autre variante de réalisation illustrée sur la figure 8, le système de réglage comporte une pluralité de boutons poussoirs aptes à interagir chacun, en position enclenchée, avec un organe élastique différent de ladite pluralité d'organes élastiques. Plus précisément, dans l'exemple représenté, le système de réglage comporte un premier bouton poussoir 8c apte à contraindre en flambage la lame centrale, et un deuxième bouton poussoir 8d apte à contraindre en flambage la lame 72. Chaque bouton poussoir 8c, 8d est placé en regard de l'extrémité libre de la lame qui lui est associée et peut être enclenché/déclenché en translatant dans la direction de la flèche, selon que l'utilisateur choisisse de sélectionner ou non les lames associées. Dans cet exemple non limitatif, aucun bouton poussoir n'est associé à la lame 70, celle-ci étant de préférence toujours sélectionnée par défaut. La pédale de la figure 8 est ici illustrée dans une situation où seul le bouton poussoir 8d est en position enclenchée. La valeur de tension de chaussage/déchaussage correspond donc ici à la somme des forces de rappel associées à la lame 70 et à la lame 72.

Dans les trois variantes précédentes correspondant au premier mode de réalisation, les organes élastiques sont des lames aptes à être sollicitées en flambage. D'autres modes de réalisation sont néanmoins possibles car le principe de l'invention est applicable quelle que soit la nature des organes élastiques utilisés.

Ainsi, dans un deuxième mode de réalisation représenté sur la figure 9, la pédale automatique comporte deux lames 70 et 71 aptes à être sollicitées en flexion lorsque l'organe d'accrochage arrière 4 est pivoté vers la position de libération de la plaque de retenue. Dans cet exemple non limitatif, le système de réglage comporte un curseur de sélection monté mobile en translation selon une direction parallèle à l'axe de rotation 6 de l'organe d'accrochage arrière 4 pour occuper différentes positions, comme indiqué par la flèche. Ce curseur de sélection comporte un organe de préhension 80 accessible à un utilisateur depuis l'arrière de l'organe d'accrochage arrière 4 pour permettre de commander manuellement le mouvement de translation du curseur jusqu'à la position de sélection, ainsi qu'un corps longitudinal 83 s'étendant parallèlement à l'axe de rotation 6 de sorte qu'il soit apte à venir en appui, selon la position de sélection du curseur sur :
- uniquement l'extrémité libre de la lame 70; ou
- uniquement l'extrémité libre de la lame 71 ; ou
- l'extrémité libre de chacune des lames 70 et 71.

La pédale de la figure 9 est ici illustrée dans une situation où le corps longitudinal 83 du curseur de sélection est en appui seulement sur l'extrémité de la lame 70 pour une sollicitation en flexion de cette lame. La valeur de tension de chaussage/déchaussage correspond donc ici à la force de rappel associée à la lame 70.

Comme dans le premier mode de réalisation, le curseur de sélection pourrait être remplacé par des curseurs se déplaçant verticalement pour agir chacun de façon séparée sur l'extrémité d'une lame associée, ou bien par des boutons poussoirs.

La figure 10 illustre schématiquement en coupe partielle un troisième mode de réalisation d'une pédale automatique conforme à l'invention. Dans cet exemple non limitatif de réalisation, les organes élastiques de la pédale sont trois ressorts hélicoïdaux de compression 75, 76 et 77 s'étendant parallèlement entre eux entre l'organe d'accrochage arrière 4 et le corps de pédale 1 selon une direction orthogonale à l'axe de rotation 6, ici dans un plan sensiblement perpendiculaire à un plan longitudinal du corps de pédale. Le ressort 75 est relié constamment sur une partie 40 de l'organe d'accrochage arrière 4, de sorte à être constamment actif. Le système de réglage 8 comporte un curseur de sélection, monté mobile en translation selon une direction parallèle à l'axe de rotation 6 de l'organe d'accrochage arrière 4 pour occuper différentes positions, comme indiqué par la flèche. Ce curseur de sélection comporte un organe de préhension (non visible) accessible à un utilisateur depuis l'arrière de l'organe d'accrochage arrière 4 pour permettre de commander manuellement le mouvement de translation du curseur jusqu'à la position de sélection. Le corps longitudinal du curseur se déplace dans un espace situé sous les extrémités libres des ressorts 76 et 77 et présente une surface supérieure conformée avec des zones de hauteurs et largeurs différentes de sorte qu'elle soit apte à venir en appui, selon la position de sélection du curseur avec :
- uniquement l'extrémité libre du ressort 76, comme illustré par la figure 10 ; ou
- l'extrémité libre de chacun des ressorts 76 et 77.

La pédale de la figure 10 est ici illustrée dans une situation où la surface supérieure du corps longitudinal du curseur de sélection est en appui seulement sur l'extrémité du ressort 76 pour une sollicitation en compression de ce ressort. La valeur de tension de chaussage/déchaussage correspond donc ici à la somme des forces de rappel associées aux deux ressorts 75 et 76.

Bien entendu, l'invention n'est pas limitée aux modes de réalisation décrits et illustrés sur les figures mais de nombreuses variantes sont envisageables sans pour autant sortir du cadre de la présente invention.

Ainsi par exemple, dans les différents modes de réalisation décrits ci-dessus, le système de réglage est porté par l'organe d'accrochage arrière 4, mais pourrait tout aussi bien être porté par le corps de pédale, en inversant la position des organes élastiques.

Par ailleurs, comme indiqué précédemment, le principe de l'invention est applicable quelle que soit la nature des organes élastiques utilisés.

Ainsi, les organes élastiques au sein d'une même pédale automatique peuvent être notamment des lames sollicitées en flambage, des lames sollicitées en flexion, des ressorts de compression, des barres sollicitées en torsion, ou toute combinaison de ces types d'organes élastiques. On peut ainsi prévoir notamment une pédale automatique pour laquelle:
- au moins un organe élastique de ladite pluralité d'organes élastiques est un ressort hélicoïdal ; et/ou
- au moins un organe élastique de ladite pluralité d'organes élastiques est un organe élastique allongé, s'étendant dans un plan longitudinal par rapport au corps de pédale, par exemple une lame sollicitée en flambage ou en flexion.

Que les organes élastiques réunis au sein d'une même pédale automatique soient ou non de même nature, on peut prévoir que la pédale comprenne au moins deux organes élastiques avec des raideurs de valeurs différentes.

Les organes élastiques réunis au sein d'une même pédale s'étendent tous entre l'organe d'accrochage arrière 4 et le corps de pédale 1, mais ne sont pas nécessairement parallèles entre eux. Ainsi, on peut prévoir de combiner des organes élastiques qui soient orientés différemment, par exemple au moins un premier organe élastique s'étendant dans un plan longitudinal par rapport au corps de pédale, et au moins un deuxième organe élastique s'étendant sensiblement perpendiculairement par rapport au premier organe élastique.

Les différentes variantes de réalisation du système de réglage (un ou plusieurs curseurs de sélection, boutons poussoirs) peuvent être combinées entre elles au sein d'une même pédale.

## Revendications

1. Pédale automatique de cycle comportant un corps de pédale (1) monté rotatif sur un axe de pédale (2) apte à être relié à une manivelle de pédalier, ledit corps de pédale (1) comportant des moyens d'accrochage (3, 4) d'une plaque de retenue fixée sous une chaussure de cycliste, lesdits moyens d'accrochage étant composés d'un organe d'accrochage avant fixe (3) et d'un organe d'accrochage arrière mobile (4) monté pivotant sur ledit corps de pédale (1) autour d'un axe de rotation (6) sensiblement parallèle audit axe de pédale (2), entre une position de retenue de ladite plaque en prise entre lesdits organes d'accrochage avant et arrière (3, 4), et une position de libération de ladite plaque par le pivotement dudit organe d'accrochage arrière (4) à l'encontre de l'action d'un moyen de rappel élastique relié d'une part audit organe d'accrochage arrière (4), et d'autre part audit corps de pédale (1), ladite pédale comportant en outre un système de réglage (8) de la force de rappel du moyen de rappel élastique afin de régler une tension de chaussage/déchaussage,
**caractérisée en ce que** ledit moyen de rappel élastique est composé d'un nombre variable d'organes élastiques (70-72 ; 75-77) comportant chacun une extrémité reliée audit organe d'accrochage arrière (4) et une autre extrémité reliée audit corps de pédale (1), sélectionnés parmi une pluralité d'organes élastiques (70-72 ; 75-77) s'étendant entre l'organe d'accrochage arrière (4) et le corps de pédale (1), et **en ce que** ledit système de réglage (8) est apte à sélectionner les organes élastiques composant ledit moyen de rappel élastique pour atteindre une valeur prédéfinie de tension de chaussage/déchaussage.

2. Pédale automatique selon la revendication 1, **caractérisée en ce que** ladite pluralité d'organes élastiques comprend au moins deux organes élastiques de nature différente.

3. Pédale automatique selon l'une quelconque des revendications précédentes, **caractérisée en ce qu'**au moins un organe élastique de ladite pluralité d'organes élastiques est un ressort hélicoïdal (75-77).

4. Pédale automatique selon l'une quelconque des revendications précédentes, **caractérisée en ce qu'**au moins un organe élastique de ladite pluralité d'organes élastiques est un organe élastique allongé (70-72) s'étendant dans un plan longitudinal par rapport audit corps de pédale.

5. Pédale automatique selon la revendication 4, **caractérisée en ce que** ledit organe élastique allongé est une lame (70-72) apte, lorsqu'elle est sélectionnée par ledit système de réglage (8), à être sollicitée le long de son axe longitudinal en flambage lorsque l'organe d'accrochage arrière (4) est pivoté vers la position de libération de ladite plaque de retenue.

6. Pédale automatique selon la revendication 4, **caractérisée en ce que** ledit organe élastique allongé est une lame (70-71) apte, lorsqu'elle est sélectionnée par ledit système de réglage (8), à être sollicitée en flexion lorsque l'organe d'accrochage arrière (4) est pivoté vers la position de libération de ladite plaque de retenue.

7. Pédale automatique selon l'une quelconque des revendications précédentes, **caractérisée en ce que** les organes élastiques de ladite pluralité d'organes élastiques (70-72 ; 75-77) s'étendent parallèlement entre eux.

8. Pédale automatique selon la revendication 7, **caractérisée en ce que** les organes élastiques de ladite pluralité d'organes élastiques sont des lames intégrées dans une seule et même lamelle élastique (7).

9. Pédale automatique selon la revendication 7, **caractérisée en ce que** les organes élastiques de ladite pluralité d'organes élastiques sont des lames séparées les unes des autres.

10. Pédale automatique selon la revendication 7, **caractérisée en ce que** le système de réglage (8) comporte un curseur de sélection, monté mobile en translation selon une direction parallèle à l'axe de rotation (6) pour occuper différentes positions.

11. Pédale automatique selon la revendication 10, **caractérisée en ce que** chaque organe élastique de ladite pluralité d'organes élastiques est une lame apte, lorsqu'elle est sélectionnée par ledit système de réglage (8), à être sollicitée le long de son axe longitudinal en flambage lorsque l'organe d'accrochage arrière (4) est pivoté vers la position de libération de ladite plaque de retenue, et **en ce que** ledit curseur de sélection comporte un corps longitudinal (81) muni d'une rainure longitudinale (82) s'étendant parallèlement à l'axe de rotation (6) de sorte qu'elle soit apte à venir en prise, selon la position de sélection du curseur, avec une extrémité libre de chaque lame sélectionnée.

12. Pédale automatique selon l'une quelconque des revendications 1 à 9, **caractérisée en ce que** le système de réglage (8) comporte une pluralité de boutons poussoirs (8c, 8d) aptes à interagir chacun, en position enclenchée, avec un organe élastique différent de ladite pluralité d'organes élastiques.

13. Pédale automatique selon l'une quelconque des revendications 1 à 9, **caractérisée en ce que** le système de réglage (8) comporte une pluralité de curseurs de sélection (8a, 8b) aptes à interagir chacun, en position de sélection, avec un organe élastique différent de ladite pluralité d'organes élastiques (70-72).

14. Pédale automatique selon l'une quelconque des revendications précédentes, **caractérisée en ce que** ladite pluralité d'organes élastiques comprend au moins deux organes élastiques avec des raideurs de valeurs différentes.

15. Pédale automatique selon l'une quelconque des revendications précédentes, **caractérisée en ce que** le système de réglage (8) est porté par l'organe d'accrochage arrière (4).

16. Pédale automatique selon l'une quelconque des revendications 1 à 14, **caractérisée en ce que** le système de réglage est porté par le corps de pédale.

## Patentansprüche

1. Fahrrad-Automatikpedal, das einen Pedalkörper (1) aufweist, der drehbar auf eine Pedalachse (2) montiert ist, die mit einer Tretkurbel verbunden werden kann, wobei der Pedalkörper (1) Einrasteinrichtungen (3, 4) einer unter einem Radfahrerschuh befestigten Halteplatte aufweist, wobei die Einrasteinrichtungen aus einem ortsfesten vorderen Einrastelement (3) und einem beweglichen hinteren Einrastelement (4) bestehen, das auf den Pedalkörper (1) um eine Drehachse (6) im Wesentlichen parallel zur Pedalachse (2) zwischen einer Haltestellung der Platte in Eingriff zwischen den vorderen und hinteren Einrastelementen (3, 4) und einer Freigabestellung der Platte durch das Schwenken des hinteren Einrastelements (4) gegen die Wirkung einer elastischen Rückstelleinrichtung schwenkbar montiert ist, die einerseits mit dem hinteren Einrastelement (4) und andererseits mit dem Pedalkörper (1) verbunden ist, wobei das Pedal außerdem ein Einstellsystem (8) der Rückstellkraft der elastischen Rückstelleinrichtung aufweist, um eine Einstiegs-/Ausstiegspannung einzustellen,
**dadurch gekennzeichnet, dass** die elastische Rückstelleinrichtung aus einer variablen Anzahl von elastischen Elementen (70-72; 75-77) besteht, die je ein Ende mit dem hinteren Einrastelement (4) verbunden und ein anderes Ende mit dem Pedalkörper (1) verbunden haben, ausgewählt aus einer Vielzahl von elastischen Elementen (70-72; 75-77), die sich zwischen dem hinteren Einrastelement (4) und dem Pedalkörper (1) erstrecken, und dass das Einstellsystem (8) die die elastische Rückstelleinrichtung bildenden elastischen Elemente auswählen kann, um einen vordefinierten Wert der Einstiegs-/Ausstiegspannung zu erreichen.

2. Automatikpedal nach Anspruch 1, **dadurch gekennzeichnet, dass** die Vielzahl elastischer Elemente mindestens zwei elastische Elemente unterschiedlicher Beschaffenheit enthält.

3. Automatikpedal nach einem der vorhergehenden Ansprüche, **dadurch gekennzeichnet, dass** mindestens ein elastisches Element der Vielzahl elastischer Elemente eine Schraubenfeder (75-77) ist.

4. Automatikpedal nach einem der vorhergehenden Ansprüche, **dadurch gekennzeichnet, dass** mindestens ein elastisches Element der Vielzahl elastischer Elemente ein längliches elastisches Element (70-72) ist, das sich bezüglich des Pedalkörpers in einer Längsebene erstreckt.

5. Automatikpedal nach Anspruch 4, **dadurch gekennzeichnet, dass** das längliche elastische Element ein Plättchen (70-72) ist, das, wenn es vom Einstellsystem (8) ausgewählt wird, entlang seiner Längsachse knickbeansprucht werden kann, wenn das hintere Einrastelement (4) in die Freigabestellung der Halteplatte geschwenkt wird.

6. Automatikpedal nach Anspruch 4, **dadurch gekennzeichnet, dass** das längliche elastische Element ein Plättchen (70-71) ist, das, wenn es vom Einstellsystem (8) ausgewählt wird, biegebeansprucht werden kann, wenn das hintere Einrastelement (4) in die Freigabestellung der Halteplatte geschwenkt wird.

7. Automatikpedal nach einem der vorhergehenden Ansprüche, **dadurch gekennzeichnet, dass** die elastischen Elemente der Vielzahl elastischer Elemente (70-72; 75-77) sich parallel zueinander erstrecken.

8. Automatikpedal nach Anspruch 7, **dadurch gekennzeichnet, dass** die elastischen Elemente der Vielzahl elastischer Elemente Plättchen sind, die in eine einzige gleiche elastische Lamelle (7) integriert sind.

9. Automatikpedal nach Anspruch 7, **dadurch gekennzeichnet, dass** die elastischen Elemente der Vielzahl elastischer Elemente voneinander getrennte Plättchen sind.

10. Automatikpedal nach Anspruch 7, **dadurch gekennzeichnet, dass** das Einstellsystem (8) einen Auswahlschieber aufweist, der translationsbeweglich gemäß einer Richtung parallel zur Drehachse (6) montiert ist, um verschiedene Stellungen einzunehmen.

11. Automatikpedal nach Anspruch 10, **dadurch gekennzeichnet, dass** jedes elastische Element der Vielzahl elastischer Elemente ein Plättchen ist, das, wenn es vom Einstellsystem (8) ausgewählt wird, entlang seiner Längsachse knickbeansprucht werden kann, wenn das hintere Einrastelement (4) in die Freigabestellung der Halteplatte geschwenkt wird, und dass der Auswahlschieber einen länglichen Körper (81) aufweist, der mit einer Längsrille (82) versehen ist, die sich parallel zur Drehachse (6) erstreckt, so dass sie gemäß der Auswahlstellung des Schiebers mit einem freien Ende jedes ausgewählten Plättchens in Eingriff kommen kann.

12. Automatikpedal nach einem der Ansprüche 1 bis 9, **dadurch gekennzeichnet, dass** das Einstellsystem (8) eine Vielzahl von Druckknöpfen (8c, 8d) aufweist, die je in der niedergedrückten Stellung mit einem anderen elastischen Element der Vielzahl elastischer Elemente interagieren können.

13. Automatikpedal nach einem der Ansprüche 1 bis 9, **dadurch gekennzeichnet, dass** das Einstellsystem (8) eine Vielzahl von Auswahlschiebern (8a, 8b) aufweist, die je in der Auswahlstellung mit einem anderen elastischen Element der Vielzahl elastischer Elemente (70-72) interagieren können.

14. Automatikpedal nach einem der vorhergehenden Ansprüche, **dadurch gekennzeichnet, dass** die Vielzahl elastischer Elemente mindestens zwei Elemente mit Steifigkeiten unterschiedlicher Werte enthalten.

15. Automatikpedal nach einem der vorhergehenden Ansprüche, **dadurch gekennzeichnet, dass** das Einstellsystem (8) vom hinteren Einrastelement (4) getragen wird.

16. Automatikpedal nach einem der Ansprüche 1 bis 14, **dadurch gekennzeichnet, dass** das Einstellsystem vom Pedalkörper getragen wird.

## Claims

1. Automatic cycle pedal including a pedal body (1) rotatably mounted on a pedal axle (2) adapted to be connected to a pedal crank, said pedal body (1) including means (3, 4) for attaching a retaining plate fixed to the bottom of a cyclist's shoe, said attachment means consisting of a fixed front attachment member (3) and a mobile rear attachment member (4) mounted to pivot on said pedal body (1) about a rotation axis (6) substantially parallel to said pedal axle (2), between a position retaining said plate engaged between said front and rear attachment members (3, 4), and a position freeing said plate by pivoting of said rear attachment member (4) against the action of an elastic return means connected on the one hand to said rear attachment member (4) and on the other hand to said pedal body (1), said pedal further including a system (8) for adjusting the return force of the elastic return means in order to adjust a shoe attachment/detachment tension,
**characterized in that** said elastic return means consists of a variable number of elastic members (70-72; 75-77) each having one end connected to said rear attachment member (4) and another end connected to said pedal body (1), selected from a plurality of elastic members (70-72; 75-77) extending between the rear attachment member (4) and the pedal body (1), and **in that** said adjustment system (8) is adapted to select the elastic members constituting said elastic return means to achieve a predefined shoe attachment/detachment tension value.

2. Automatic pedal according to Claim 1, **characterized in that** said plurality of elastic members comprises at least two elastic members of different kinds.

3. Automatic pedal according to either one of the preceding claims, **characterized in that** at least one elastic member from said plurality of elastic members is a coil spring (75-77).

4. Automatic pedal according to any one of the preceding claims, **characterized in that** at least one elastic member from said plurality of elastic members is an elongate elastic member (70-72) extending in a longitudinal plane relative to said pedal body.

5. Automatic pedal according to Claim 4, **characterized in that** said elongate elastic member is a leafspring (70-72) adapted, when it is selected by said adjustment system (8), to be loaded along its longitudinal axis in warping when the rear attachment member (4) is pivoted toward the position releasing said retaining plate.

6. Automatic pedal according to Claim 4, **characterized in that** said elongate elastic member is a leafspring (70-71) adapted, when it is selected by said adjustment system (8), to be loaded in bending when the rear attachment member (4) is pivoted toward the position releasing said retaining plate.

7. Automatic pedal according to any one of the preceding claims, **characterized in that** the elastic members of said plurality of elastic members (70-72; 75-77) extend parallel to one another.

8. Automatic pedal according to Claim 7, **characterized in that** the elastic members of said plurality of elastic members are leafsprings integrated into the same single elastic leafspring assembly (7).

9. Automatic pedal according to Claim 7, **characterized in that** the elastic members of said plurality of elastic members are leafsprings separate from one another.

10. Automatic pedal according to Claim 7, **characterized in that** the adjustment system (8) includes a selection cursor mounted to be mobile in translation in a direction parallel to the rotation axis (6) to occupy different positions.

11. Automatic pedal according to Claim 10, **characterized in that** each elastic member of said plurality of elastic members is a leafspring adapted, when it is selected by said adjustment system (8), to be loaded in warping along its longitudinal axis when the rear attachment member (4) is pivoted toward the position releasing said retaining plate, and **in that** said selection cursor includes a longitudinal body (81) provided with a longitudinal groove (82) extending parallel to the rotation axis (6) so that it is able to come to be engaged, depending on the selection position of the cursor, with a free end of each selected leafspring.

12. Automatic pedal according to any one of Claims 1 to 9, **characterized in that** the adjustment system (8) includes a plurality of pushbuttons (8c, 8d) each adapted to interact, in the clamped position, with a different elastic member from said plurality of elastic members.

13. Automatic pedal according to any one of Claims 1 to 9, **characterized in that** the adjustment system (8) includes a plurality of selection cursors (8a, 8b) each adapted to interact, in the selection position, with a different elastic member from said plurality of elastic members (70-72).

14. Automatic pedal according to any one of the preceding claims, **characterized in that** said plurality of elastic members comprises at least two elastic members with different values of stiffness.

15. Automatic pedal according to any one of the preceding claims, **characterized in that** the adjustment system (8) is carried by the rear attachment member (4).

16. Automatic pedal according to any one of Claims 1 to 14, **characterized in that** the adjustment system is carried by the pedal body.
